# EUROPÄISCHE PATENTANMELDUNG

(11) **EP 4 603 422 A1**
(43) Veröffentlichungstag der Anmeldung: **20.08.2025**
(21) Anmeldenummer: 25158475.1
(22) Anmeldetag: 18.02.2025
(51) Int. Cl.: B65G 19/02, B65G 43/02, B65G 47/84

(54) **FÖRDERER ZUM BEHÄLTERTRANSPORT UND VERFAHREN ZUM ÜBERWACHEN DES FÖRDERERS**

(30) Priorität: 19.02.2024 DE 102024104482
(71) Anmelder: KRONES AG, 93073 Neutraubling (DE)
(72) Erfinder: LANGWIESER, Sebastian, 93073 Neutraubling (DE)
(74) Vertreter: v. Bezold & Partner Patentanwälte - PartG mbB

(57) **Zusammenfassung**

Die Erfindung betrifft u.a. einen Förderer (18) zum Behältertransport, vorzugsweise Dosentransport, für eine Behälterbehandlungsanlage (10). Der Förderer (18) weist ein umlaufendes Transportelement (20) und mehrere Mitnehmer (32), die voneinander beabstandet entlang des umlaufenden Transportelements (20) an dem umlaufenden Transportelement (20) zum Mitnehmen von Behältern (12) befestigt sind, auf. Der Förderer (18) weist ferner eine Sensorvorrichtung (36) auf, die dazu ausgebildet ist, die mehreren Mitnehmer (32) zu erfassen.

## Beschreibung

### Technisches Gebiet

Die Erfindung betrifft einen Förderer zum Behältertransport für eine Behälterbehandlungsanlage sowie eine Behälterbehandlungsanlage mit dem Förderer. Die Erfindung betrifft ferner ein Verfahren zum Überwachen eines Förderers zum Behältertransport für eine Behälterbehandlungsanlage.

### Technischer Hintergrund

Es ist bekannt, in einer Behälterbehandlungsanlage Förderer zum Transportieren von Behältern zwischen unterschiedlichen Maschinen der Anlage einzusetzen.

DE 10 2020 116 779 A1 bezieht sich auf eine Behälterbehandlungsvorrichtung, insbesondere Füllmaschine zum Füllen von Dosen oder dergleichen Behälter mit einem flüssigen Füllgut. Dabei umfasst die Behälterbehandlungsvorrichtung einen ersten als Behältereinlauf ausgebildeten Transporteur, einen in Behandlungsrichtung nachgelagerten und um eine Maschinenachse umlaufenden Rotor mit mehreren Behandlungspositionen zur Behandlung der Behälter, sowie einen dem Rotor in Behandlungsrichtung wiederum nachgelagerten und als Behälterauslauf ausgebildeten zweiten Transporteur. Der zweite Transporteur ist dabei als Kettenförderer ausgebildet, der an einem endlos umlaufend angetriebenen Fördermittel zumindest einen mit dem Fördermittel mitbewegten Führungsfinger mit einem ersten und einem zweiten Führungsabschnitt aufweist, der die an den mehreren Behandlungspositionen des Rotors behandelten und noch unverschlossenen Behälter übernimmt.

Nachteilig am bekannten Stand der Technik kann sein, dass eine Verschleißüberwachung bezüglich des Förderers herkömmlich nur in Betriebspausen und manuell durch Sichtprüfung oder Vermessung möglich ist.

Der Erfindung liegt die Aufgabe zu Grunde, eine verbesserte Technik zur Verschleißüberwachung für einen Förderer, vorzugsweise Kettenförderer, einer Behälterbehandlungsanlage zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft einen (z. B. Ketten-) Förderer zum Behältertransport, vorzugsweise Dosentransport, für eine Behälterbehandlungsanlage. Der Förderer weist ein umlaufendes Transportelement, vorzugsweise Transportkette, auf. Der Förderer weist ferner mehrere (z. B. Behälter-) Mitnehmer, die voneinander beabstandet entlang des umlaufenden Transportelements an dem umlaufenden Transportelement zum Mitnehmen von Behältern, vorzugsweise jeweils eines Behälters, (z. B. einseitig) befestigt sind, auf. Der Förderer weist ferner eine (z. B. optische) Sensorvorrichtung, die dazu ausgebildet ist, die mehreren Mitnehmer zu erfassen, auf.

Vorteilhaft kann der Förderer eine automatische Verschleißüberwachung des Transportelements und v.a. der Mitnehmer ermöglichen. Durch die Erfassung der Mitnehmer kann bspw. geprüft werden, ob eine Positionsabweichung eines oder mehrerer Mitnehmer besteht, wodurch bspw. auf eine ungewünschte (z. B. crashbedingte) Verformung eines Mitnehmers oder eine ungewünschte Längung des Transportelements geschlossen werden kann. Die Verschleißüberwachung kann vorzugsweise während eines Produktionsbetriebs ermöglicht werden, sodass keine Betriebspausen für die Verschleißerkennung notwendig sind. Insbesondere Verformungen einzelner Mitnehmer können somit sofort erkannt werden, bevor eine größere Produktcharge mit beschädigten Behältern produziert wird. Die Information über den Verschleißzustand kann vorteilhaft für Wartungsmeldungen und/oder sogar zum automatischen Anpassen des Betriebs des Förderers zum Verbessern der Behälterübernahme und/oder der Behälterübergabe unter den bereits eingetretenen Verschleißerscheinungen genutzt werden.

In einem Ausführungsbeispiel ist die Sensorvorrichtung dazu ausgebildet, die mehreren Mitnehmer während eines Betriebs des Förderers nacheinander an mindestens einer vorgegebenen (stationären) Position, vorzugsweise in einem Antriebsbereich und/oder in einem Umlenkbereich, des Förderers zu erfassen. Vorteilhaft kann damit einerseits eine Überwachung während des Betriebs ermöglicht werden. Andererseits kann durch die definierte Position zur Erfassung eine sehr hohe Auflösung und Genauigkeit der Verschleißüberwachung ermöglicht werden. Die Position im Antriebsbereich kann dabei besonders vorteilhaft genutzt werden, um eine ungewünschte Verformung der Mitnehmer zu erkennen, da die Anbindungen der Mitnehmer im Antriebsbereich über die Befestigung an dem Transportelement und dessen Eingriff mit einem Antriebsrad o.Ä. festgelegt sind. Eine Verformung in oder entgegen der Transportrichtung kann somit vorteilhaft zuverlässig erkannt werden. Die Position im Umlenkbereich kann wiederum besonders vorteilhaft genutzt werden, um eine ungewünschte Längung des Transportelements zu erkennen.

In einem weiteren Ausführungsbeispiel ist die Sensorvorrichtung dazu ausgebildet, die mehreren Mitnehmer jeweils beim Unterbrechen mindestens einer (z. B. vertikal ausgerichteten) Signalschranke, vorzugsweise Lichtschranke, der Sensorvorrichtung zu erfassen. Vorteilhaft kann damit eine zuverlässige und langlebige Erfassung auch bei hohen Fördergeschwindigkeiten ermöglicht werden.

In einer Ausführungsform sind die mehreren Mitnehmer als an dem umlaufenden Transportelement befestigte Kragarme ausgebildet.

In einer weiteren Ausführungsform ist die Sensorvorrichtung dazu ausgebildet, die Kragarme an einem freien Ende des jeweiligen Kragarms zu erfassen. Vorteilhaft können damit insbesondere Verformungen der Kragarme zu deren Befestigung an dem Transportelement zuverlässig erkannt werden.

In einer Ausführungsvariante weist der Förderer ein Antriebsrad, vorzugsweise Antriebsritzel, das antreibend mit dem Transportelement verbunden ist, auf. Die Sensorvorrichtung weist einen Antriebsbereich-Sensor, vorzugsweise (z. B. vertikal ausgerichtete) Signalschranke, besonders bevorzugt Lichtschranke, auf, der zum Erfassen der Mitnehmer beim Passieren des Antriebsrads angeordnet ist, vorzugsweise zum Ermitteln eines Verformungsverschleißzustands des jeweiligen Mitnehmers. Wie bereits erwähnt kann damit vorteilhaft eine ungewünschte Verformung der Mitnehmer erkannt werden, da die Anbindungen der Mitnehmer im Antriebsbereich über die Befestigung an dem Transportelement und dessen Eingriff mit dem Antriebsrad festgelegt sind.

In einer weiteren Ausführungsvariante weist der Förderer ein Umlenkrad, vorzugsweise Umlenkritzel, das zum Umlenken des Transportelements mit dem Transportelement verbunden ist, auf. Die Sensorvorrichtung weist einen Umlenkbereich-Sensor, vorzugsweise (z. B. vertikal ausgerichtete) Signalschranke, besonders bevorzugt Lichtschranke, auf, der zum Erfassen der Mitnehmer beim Passieren des Umlenkrads angeordnet ist, vorzugsweise zum Ermitteln eines Längungsverschleißzustands des umlaufenden Transportelements. Wie bereits erwähnt kann damit vorteilhaft eine ungewünschte Längung des Transportelements zuverlässig erkannt werden.

In einem Ausführungsbeispiel weist der Förderer ferner eine Auswerteeinrichtung auf, die dazu konfiguriert ist:
- abhängig von einer Signalausgabe der Sensorvorrichtung einen Verschleißzustand des Förderers zu ermitteln; und optional
- eine (z. B. visuelle, akustische und/oder haptische) Ausgabeeinrichtung zum Ausgeben des ermittelten Verschleißzustands zu betreiben und/oder den ermittelten Verschleißzustand an eine Servereinrichtung zu senden und/oder einen Betrieb einer Antriebseinrichtung des Förderers zum zumindest teilweisen Kompensieren des ermittelten Verschleißzustands anzupassen.

In einem weiteren Ausführungsbeispiel ist die Auswerteeinrichtung dazu konfiguriert:
- abhängig von der Signalausgabe der Sensorvorrichtung eine Positionsabweichung des jeweils erfassten Mitnehmers zwischen einer Ist-Position des jeweils erfassten Mitnehmers, vorzugsweise bezüglich des umlaufenden Transportelements, und einer Soll-Position des jeweils erfassten Mitnehmers, vorzugsweise bezüglich des umlaufenden Transportelements, zu ermitteln; und
- den Verschleißzustand des Förderers abhängig von den ermittelten Positionsabweichungen zu ermitteln.

In einem weiteren Ausführungsbeispiel ist die Auswerteeinrichtung dazu konfiguriert:
- für die mehreren Mitnehmer jeweils einzeln und identifizierbar einen Verschleißzustand, vorzugsweise Verformungsverschleißzustand, abhängig von der jeweils ermittelten Positionsabweichung zu ermitteln; und/oder
- für den Fall einer über mehrere aufeinanderfolgende Mitnehmer hinweg aufgetretenen Positionsabweichung mit gleichem Vorzeichen einen Verschleißzustand, vorzugsweise Längungsverschleißzustand, des umlaufenden Transportelements zu ermitteln.

In einem weiteren Ausführungsbeispiel ist die Auswerteeinrichtung dazu konfiguriert:
- die Ist-Position des jeweils erfassten Mitnehmers abhängig von der Signalausgabe der Sensorvorrichtung und mittels einer Antriebssteuereinrichtung, vorzugsweise Servoumrichter, einer Antriebseinrichtung des Förderers zu ermitteln, wobei besonders bevorzugt die Signalausgabe der Sensorvorrichtung auf einen Triggereingang der Antriebssteuereinrichtung gelegt ist; oder
- die Ist-Position des jeweils erfassten Mitnehmers abhängig von der Signalausgabe der Sensorvorrichtung und einer Signalausgabe eines Drehgebers des Förderers zu ermitteln.

Ein weiterer Aspekt betrifft eine Behälterbehandlungsanlage, vorzugsweise Dosenbehandlungsanlage. Die Behälterbehandlungsanlage weist eine Füllvorrichtung, vorzugsweise Rundläufer-Füllvorrichtung, zum Füllen von Behältern, eine Verschließvorrichtung, vorzugsweise Rundläufer-Verschließvorrichtung, zum Verschließen der Behälter sowie einen Förderer wie hierin offenbart auf. Der Förderer kann mit der Füllvorrichtung zum Übernehmen der Behälter von der Füllvorrichtung und/oder mit der Verschließvorrichtung zum Übergeben von übernommenen Behältern an die Verschließvorrichtung verbunden sein.

Bevorzugt kann das Antriebsrad des Förderers an einem der Verschließvorrichtung zugeordnetem Ende des Förderers angeordnet sein. Vorteilhaft kann dann mittels des Antriebsbereich-Sensors der Verschleiß direkt an der hochrelevanten Behälterübergabe von dem Förderer zu der Verschließvorrichtung überwacht werden, wodurch bspw. auch automatische Anpassungen des Fördererbetriebs zum Kompensieren des Verschleißes und Verbessern der Behälterübergabe ermöglicht werden.

Vorzugsweise kann die Behälterbehandlungsanlage zum Temperieren, Herstellen, Reinigen, Beschichten, Prüfen, Abfüllen, Verschließen, Pasteurisieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie, ausgebildet sein.

Beispielsweise können die Behälter als Flaschen, Dosen, Kanister, Kartons, Flakons, Tuben usw. ausgeführt sein.

Ein weiterer Aspekt betrifft ein Verfahren zum Überwachen eines (z. B. Ketten-) Förderers zum Behältertransport, vorzugsweise (z. B. Getränke-) Dosentransport und/oder wie hierin offenbart, für eine Behälterbehandlungsanlage (z. B. wie hierin offenbart). Das Verfahren weist ein Betreiben des Förderers zum Bewegen eines umlaufenden Transportelements, vorzugsweise Transportkette, des Förderers zusammen mit mehreren (z. B. Behälter-) Mitnehmern, die voneinander beabstandet entlang des umlaufenden Transportelements an dem umlaufenden Transportelement zum Mitnehmen von Behältern, vorzugsweise jeweils eines Behälters, (z. B. einseitig) befestigt sind, auf. Das Verfahren weist ferner ein Erfassen der mehreren Mitnehmer während des Betreibens des Förderers mittels einer (z. B. optischen) Sensorvorrichtung, vorzugsweise nacheinander an mindestens einer vorgegebenen (stationären) Position, bevorzugt in einem Transportelement-Antriebsbereich und/oder in einem Transportelement-Umlenkbereich, des Förderers auf. Vorteilhaft lassen sich mit dem Verfahren die gleichen Vorteile erzielen, die bereits unter Bezugnahme auf den Förderer beschrieben wurden. Selbiges gilt für die bevorzugten Ausführungsbeispiele des Verfahrens.

In einem Ausführungsbeispiel ist mindestens eines erfüllt von:
- die mehreren Mitnehmer werden jeweils beim Unterbrechen mindestens einer (z. B. vertikal ausgerichteten) Signalschranke, vorzugsweise Lichtschranke, der Sensorvorrichtung erfasst;
- die mehreren Mitnehmer sind als an dem umlaufenden Transportelement befestigte Kragarme ausgebildet und optional werden die Kragarme an einem freien Ende des jeweiligen Kragarms von der Sensorvorrichtung erfasst;
- die mehreren Mitnehmer werden von einem Antriebsbereich-Sensor (z. B. Signalschranke, besonders bevorzugt Lichtschranke) beim Passieren eines Antriebsrads des Förderers erfasst, vorzugsweise zum Ermitteln eines Verformungsverschleißzustands des jeweiligen Mitnehmers; und
- die mehreren Mitnehmer werden von einem Umlenkbereich-Sensor (z. B. Signalschranke, besonders bevorzugt Lichtschranke) beim Passieren eines Umlenkrads des Förderers erfasst, vorzugsweise zum Ermitteln eines Längungsverschleißzustands des umlaufenden Transportelements.

In einem weiteren Ausführungsbeispiel weist das Verfahren ferner auf, mittels einer Auswerteeinrichtung, Ermitteln eines Verschleißzustands des Förderers abhängig von dem Erfassen der mehreren Mitnehmer und optional Betreiben einer (z. B. visuellen, akustischen und/oder haptischen) Ausgabeeinrichtung zum Ausgeben des ermittelten Verschleißzustands und/oder Senden des ermittelten Verschleißzustands an eine Servereinrichtung und/oder Anpassen eines Betriebs einer Antriebseinrichtung des Förderers zum zumindest teilweisen Kompensieren des ermittelten Verschleißzustands.

Vorzugsweise kann mittels der Auswerteeinrichtung, abhängig von dem Erfassen der mehreren Mitnehmer, eine Positionsabweichung des jeweils erfassten Mitnehmers zwischen einer Ist-Position des jeweils erfassten Mitnehmers, vorzugsweise bezüglich des umlaufenden Transportelements, und einer vorgegebenen Soll-Position des jeweils erfassten Mitnehmers, vorzugsweise bezüglich des umlaufenden Transportelements, ermittelt werden und der Verschleißzustand des Förderers abhängig von den ermittelten Positionsabweichungen ermittelt werden.

Optional kann für die mehreren Mitnehmer jeweils einzeln und identifizierbar ein Verschleißzustand, vorzugsweise Verformungsverschleißzustand, abhängig von der jeweils ermittelten Positionsabweichung ermittelt werden. Alternativ oder zusätzlich kann für den Fall einer über mehrere aufeinanderfolgende Mitnehmer hinweg aufgetretenen Positionsabweichung mit gleichem Vorzeichen ein Verschleißzustand, vorzugsweise Längungsverschleißzustand, des umlaufenden Transportelements ermittelt werden. Alternativ oder zusätzlich kann die Ist-Position des jeweils erfassten Mitnehmers abhängig von der Signalausgabe der Sensorvorrichtung und mittels einer Antriebssteuereinrichtung, vorzugsweise Servoumrichter, einer Antriebseinrichtung des Förderers (z. B. ist die Signalausgabe der Sensorvorrichtung auf einen Triggereingang der Antriebssteuereinrichtung gelegt) oder abhängig von der Signalausgabe der Sensorvorrichtung und einer Signalausgabe eines Drehgebers des Förderers ermittelt werden.

Vorzugsweise kann sich der Begriff "Auswerteeinrichtung" und/oder "Steuereinrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Behälterbehandlungsanlage gemäß einem Ausführungsbeispiel der vorliegenden Offenbarung;
- Figur 2: ein beispielhaftes Diagramm zum Aufzeigen von Ist-Positionen zu Soll-Positionen von Mitnehmern entlang eines umlaufenden Transportelements eines Förderers gemäß einem Ausführungsbeispiel der vorliegenden Offenbarung; und
- Figur 3: ein beispielhaftes Diagramm zum Aufzeigen von Ist-Positionen zu Soll-Positionen von Mitnehmern entlang eines umlaufenden Transportelements eines Förderers gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

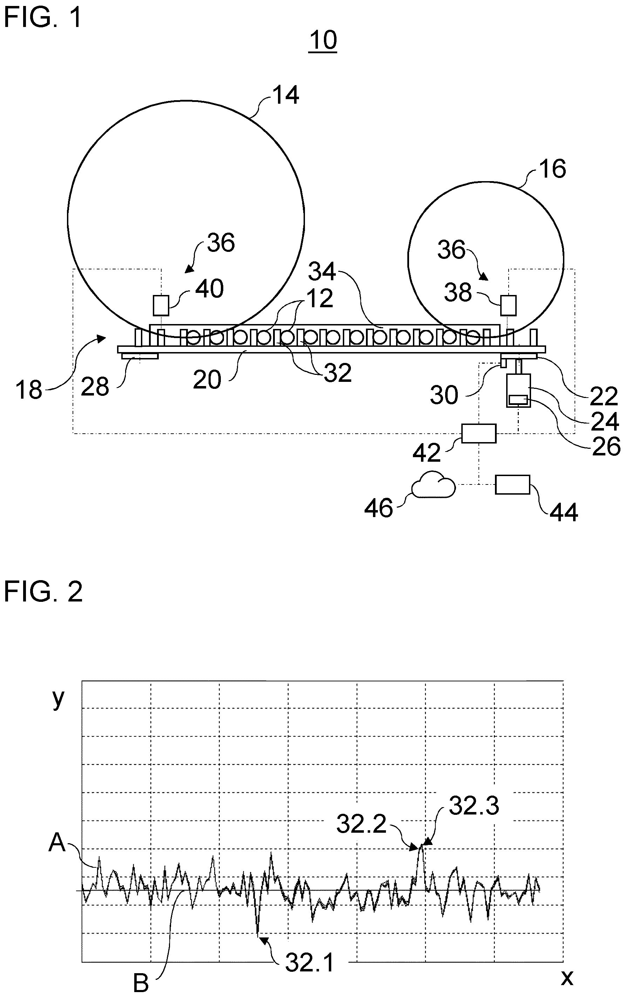

Die Figur 1 zeigt eine Behälterbehandlungsanlage 10 zum Behandeln von Behältern 12 (nur einige in Figur 1 dargestellt). Bevorzugt sind die Behälter 12 als Dosen ausgeführt, bzw. die Behälterbehandlungsanlage 10 ist eine Dosenbehandlungsanlage.

Die Behälterbehandlungsanlage 10 weist einen Förderer 18 zum Transportieren der Behälter 12 auf. Die Behälterbehandlungsanlage 10 kann ferner bspw. eine Füllvorrichtung 14 und/oder eine Verschließvorrichtung 16 aufweisen.

Die Füllvorrichtung 14 kann die Behälter 12 füllen, vorzugsweise mit einem flüssigen oder pastösen Medium. Die Füllvorrichtung 14 ist vorzugsweise als eine Rundläufer-Füllvorrichtung ausgeführt. Die Füllvorrichtung 14 kann mehrere Füllventile zum gleichzeitigen bzw. zeitlich überlappenden Befüllen mehrerer Behälter 12 aufweisen. Bspw. können die Füllventile um einen Umfang eines Füllerkarussells der Rundläufer-Füllvorrichtung angeordnet sein.

Die Verschließvorrichtung 16 kann die Behälter 12 verschließen, z. B. mit einem Deckel, einem Korken, einem Kronkorken oder einem Schraubverschluss. Die Verschließvorrichtung 16 kann vorzugsweise als eine Rundläufer-Verschließvorrichtung ausgeführt sein. Die Verschließvorrichtung 16 kann mehrere Verschließstationen zum gleichzeitigen bzw. zeitlich überlappenden Verschließen mehrerer Behälter 12 aufweisen. Bspw. können die Verschließstationen um einen Umfang eines Verschließerkarussells der Rundläufer-Verschließvorrichtung angeordnet sein. Die Verschließvorrichtung kann bezüglich eines Behälterstroms stromabwärts von der Füllvorrichtung 14 angeordnet sein.

Der Förderer 18 kann die Füllvorrichtung 14 und die Verschließvorrichtung 16 zum Transportieren von Behältern 12 von der Füllvorrichtung 14 zu der Verschließvorrichtung 16 miteinander, vorzugsweise direkt, verbinden. Der Förderer 18 kann mit der Füllvorrichtung 14 zum Übernehmen von Behältern 12 von der Füllvorrichtung 14 verbunden sein, vorzugsweise direkt. Der Förderer18 kann mit der Verschließvorrichtung 16 zum Übergeben der übernommenen Behälter 12 an die Verschließvorrichtung 16 verbunden sein, vorzugsweis direkt.

Es ist auch möglich, dass der Förderer 18 die Behälter 12 nicht direkt von der Füllvorrichtung 14 übernimmt, sondern bspw. von einem Auslaufstern, der direkt mit der Füllvorrichtung 14 verbunden ist. Es ist ebenfalls möglich, dass der Förderer 18 die Behälter 12 nicht direkt an die Verschließvorrichtung 16 übergibt, sondern bspw. an einen Einlaufstern, der direkt mit der Verschließvorrichtung 16 verbunden ist.

Der Förderer 18 kann seitliche Führungsgeländer zum seitlichen Führen der transportierten Behälter 12 aufweisen.

Der Förderer 18 weist ein umlaufendes Transportelement 20, mehrere (z. B. Dosen-) Mitnehmer 32 und eine Sensorvorrichtung 36 auf. Der Förderer 18 kann bspw. noch ein Antriebsrad 22, eine Antriebseinrichtung 24, eine Antriebssteuereinrichtung 26, ein Umlenkrad 28, einen Drehgeber 30, eine Auswerteeinrichtung 42 und/oder eine Ausgabeeinrichtung 44 aufweisen.

Das Transportelement 20 kann ein geschlossenes Transportelement bzw. ein Endlos-Transportelement sein. Das Transportelement 20 kann bspw. das Antriebsrad 22 und das Umlenkrad 28 umlaufen. Bevorzugt ist das Transportelement 20 eine Transportkette. Das Transportelement 20 kann die Behälter 12 mittels der Mitnehmer 32 transportieren.

Das Antriebsrad 22 kann antreibend mit dem umlaufenden Transportelement 20 verbunden sein. Beispielsweise kann das Antriebsrad 22 als ein Antriebsritzel im Eingriff mit dem umlaufenden Transportelement 20 sein. Bevorzugt kann das Antriebsrad 22 ein Antriebskettenrad im Eingriff mit dem als Transportkette ausgeführten Transportelement 20 sein.

Bevorzugt ist das Antriebsrad 22 an einem der Verschließvorrichtung 16 zugeordneten Ende des Förderers 18 angeordnet. Vorzugsweise erfolgt im Bereich des Antriebsrads 22 oder direkt angrenzend daran eine Übergabe der Behälter 12 von dem Förderer 18 zu der Verschließvorrichtung 16.

Die Antriebseinrichtung 24 kann antreibend mit dem Antriebsrad 22 verbunden sein. Bevorzugt kann die Antriebseinrichtung 24 als ein Elektromotor ausgeführt sein. Die Antriebsvorrichtung 24 kann beispielsweise direkt oder über ein Getriebe mit dem Antriebsrad 22 zum Antreiben des Antriebsrads 22 verbunden sein.

Die Antriebseinrichtung 24 kann eine Antriebssteuereinrichtung 26 zum Steuern eines Betriebs der Antriebseinrichtung 24 aufweisen. Bevorzugt ist die Antriebssteuereinrichtung 26 als ein sogenannter Servoumrichter ausgeführt. Die Antriebssteuereinrichtung 26 kann vorzugsweise zu jedem Zeitpunkt des Betriebs der Antriebseinrichtung 24 eine (z. B. Drehwinkel-) Position einer Antriebswelle oder eines Rotors der Antriebseinrichtung 24 und/oder eine (z. B. Drehwinkel-) Position des Antriebsrads 22 erfassen.

Das Umlenkrad 28 kann mit dem Transportelement 20 zum Umlenken des Transportelements 20 verbunden sein. Beispielsweise kann das Umlenkrad 28 als ein Umlenkritzel im Eingriff mit dem umlaufenden Transportelement 20 sein. Bevorzugt kann das Umlenkrad 28 ein Umlenkkettenrad (Leerlaufkettenrad) im Eingriff mit dem als Transportkette ausgeführten Transportelement 20 sein.

Bevorzugt ist das Umlenkrad 28 an einem der Füllvorrichtung 14 zugeordneten Ende des Förderers 18 angeordnet. Vorzugsweise erfolgt im Bereich des Umlenkrads 28 oder direkt angrenzend daran eine Übergabe der Behälter 12 von der Füllvorrichtung 14 zu dem Förderer 18.

Vorzugsweise können das Antriebsrad 22 und das Umlenkrad 28 an einander entgegengesetzten Enden des Förderers 18 angeordnet sein.

Der optionale Drehgeber 30 kann einen Drehwinkel (eine Drehwinkelposition) erfassen und ein entsprechendes Drehwinkelsignal ausgeben. Der Drehgeber 30 kann bspw. einen Drehwinkel des Antriebsrads 22, einer Antriebswelle der Antriebseinrichtung 24 und/oder eines Rotors der Antriebseinrichtung 24 erfassen. Der Drehgeber 30 kann bspw. ein Inkrementalgeber oder ein Absolutwertgeber sein.

Die Mitnehmer 32 sind voneinander beabstandet entlang des umlaufenden Transportelements 20 an dem umlaufenden Transportelement 20 zum Mitnehmen der Behälter 12 befestigt. Beispielsweise kann die Befestigung der Mitnehmer 32 an dem Transportelement 20 eine lösbare Befestigung, wie beispielsweise eine Schraubverbindung, sein. Vorzugsweise ist die Befestigung der Mitnehmer 32 jeweils nur einseitig an dem Transportelement 20. Bevorzugt kann jeder Mitnehmer 32 jeweils (nur) einen der Behälter 12 transportieren.

Die Mitnehmer 32 können äquidistant zueinander entlang des Transportelements 20 positioniert sein. Ein Abstand benachbarter Mitnehmer 32 zueinander kann auch als eine sogenannte Teilung bzw. ein sogenannter Teilungsabstand (für den Behältertransport) bezeichnet werden. Die Teilung kann beispielsweise in einem Bereich zwischen 70 mm und 110 mm liegen.

Die Mitnehmer 32 können die Behälter 12 zum Transportieren rückseitig abstützen.

Beispielsweise können die Mitnehmer 32 die Behälter 12 über eine stationäre Stützfläche 34, z. B. einen Tisch, des Förderers 18 schieben. Die Stützfläche 34 kann sich vorzugsweise von der Füllvorrichtung 14 zu der Verschließvorrichtung 16 erstrecken.

Alternativ können die Behälter 12 bspw. auf einem umlaufenden Stützelement, z. B. ein Band oder eine Mattenkette, des Förderers 18 bodenseitig abgestützt sein, während die Behälter 12 von den Mitnehmern 32 jeweils umfangsseitig (mantelseitig / rückseitig) abgestützt sind (nicht in Figur 1 dargestellt). Es ist möglich, dass das umlaufende Stützelement mit dem Transportelement 20 zum Antreiben mittels des Transportelements 20 verbunden ist.

Vorzugsweise können die Mitnehmer 32 im Bereich des Zugtrums (Arbeitstrums) des Transportelements 20 oberhalb und vertikal beabstandet von der Stützfläche 34 bzw. dem umlaufenden Stützelement des Förderers 18 positioniert sein.

Bevorzugt können die Mitnehmer 32 als Kragarme ausgebildet sein. Die Kragarme können an einem Ende an dem Transportelement 20 befestigt sein, vorzugsweise lösbar, besonders bevorzugt mittels einer Schraubverbindung. Die Kragarme können die Stützfläche 34 quer zur Transportrichtung des Förderers 18 überspannen.

Beispielsweise können die Mitnehmer 32 jeweils eine Ausnehmung (Tasche) für einen Behälter 12 aufweisen. Die Ausnehmung kann beispielsweise zylindermantelsegmentförmig sein. Die Ausnehmung kann an einer in Transportrichtung des Förderers 18 gewandten Seite des jeweiligen Mitnehmer 32 angeordnet sein.

Die Sensorvorrichtung 36 ist dazu ausgebildet, die mehreren Mitnehmer 32 zu erfassen. Bevorzugt ist die Sensorvorrichtung 36 eine optische Sensorvorrichtung 36.

Bevorzugt kann die Sensorvorrichtung 36 die Mitnehmer 32 während eines Betriebs des Förderers 18 nacheinander an mindestens einer vorgegebenen stationären Position erfassen.

Eine vorgegebene Position kann beispielsweise in einem Antriebsbereich, z. B. bei dem Antriebsrad 22, des Förderers 18 sein. Bevorzugt kann die Sensorvorrichtung 36 einen Antriebsbereich-Sensor 38 aufweisen. Der Antriebsbereich-Sensor 38 kann beim Antriebsrad 22 angeordnet sein, um die das Antriebsrad 22 passierenden Mitnehmer 32 zu erfassen.

Beispielsweise kann eine Längserstreckung des Antriebsbereich-Sensors 38 bezüglich einer Transportrichtung / Längsachse des Förderers 18 mit einer Längserstreckung des Antriebsrads 22 bezüglich der Transportrichtung / Längsachse des Förderers 18 überlappen oder zumindest aneinander angrenzen.

Eine zusätzlich oder alternativ vorgegebene Position kann beispielsweise in einem Umlenkbereich, z. B. bei dem Umlenkrad 28, des Förderers 18 sein. Bevorzugt kann die Sensorvorrichtung 36 einen Umlenkbereich-Sensor 40 aufweisen. Der Umlenkbereich-Sensor 40 kann beim Umlenkrad 28 angeordnet sein, um die das Umlenkrad 28 passierenden Mitnehmer 32 zu erfassen.

Beispielsweise kann eine Längserstreckung des Umlenkbereich-Sensors 40 bezüglich einer Transportrichtung / Längsachse des Förderers 18 mit einer Längserstreckung des Umlenkrads 28 bezüglich der Transportrichtung / Längsachse des Förderers 18 überlappen oder zumindest aneinander angrenzen.

Bevorzugt kann der Sensor 38 und/oder 40 als eine Signalschranke (Signalschranken-Sensor), vorzugsweise eine Lichtschranke (Lichtschranken-Sensor) ausgeführt sein. Die jeweilige Signalschranke kann bevorzugt vertikal ausgerichtet sein. Die jeweilige Signalschranke kann von einem den jeweiligen Sensor 38 und/oder 40 passierenden Mitnehmer 32 unterbrochen (durchbrochen) werden. Es ist allerdings auch möglich, dass die Sensorvorrichtung 36 bzw. der Sensor 38 und/oder 40 auf einem anderen, vorzugsweise optischen und/oder berührungslosen, Messprinzip beruht.

Besonders bevorzugt kann die Sensorvorrichtung 36 die als Kragarme ausgeführten Mitnehmer 32 an einem freien Ende des jeweiligen Kragarms erfassen. Beispielsweise kann der Sensor 38 und/oder 40 so angeordnet sein, dass dessen Signalschranke vom freien Ende des jeweiligen Kragarms beim Passieren des Sensors 38 und/oder 40 unterbrochen wird.

Die Auswerteeinrichtung 42 kann abhängig von einer Signalausgabe der Sensorvorrichtung 36 bzw. des Sensors 38 und/oder 40 einen Verschleißzustand des Förderers 18 ermitteln. Die Auswerteeinrichtung 42 kann hierfür bevorzugt abhängig von der Signalausgabe der Sensorvorrichtung 36 eine Positionsabweichung des jeweils erfassten Mitnehmers 32 zwischen einer Ist-Position des jeweils erfassten Mitnehmers 32, vorzugsweise bezüglich des umlaufenden Transportelements 20, und einer Soll-Position des jeweils erfassten Mitnehmers 32, vorzugsweise bezüglich des umlaufenden Transportelements 20, ermitteln.

Abhängig von der ermittelten Positionsabweichung kann dann der Verschleißzustand des Förderers 18 ermittelt werden, z. B. bei Überschreiten eines vorgegebenen Positionsabweichungstoleranzbereichs. Wird bspw. diese Positionsabweichung im Bereich des Antriebsrads 22 ermittelt, so kann für die mehreren Mitnehmer 32 jeweils einzeln und identifizierbar ein Verschleißzustand, vorzugsweise Verformungsverschleißzustand, abhängig von der jeweils ermittelten Positionsabweichung ermittelt werden. Wird bspw. diese Positionsabweichung im Bereich des Umlenkrads 28 ermittelt, so kann für den Fall einer über mehrere (z. B. drei, vier, fünf oder mehr) aufeinanderfolgende Mitnehmer 32 hinweg aufgetretenen Positionsabweichung mit gleichem Vorzeichen ein Verschleißzustand, vorzugsweise Längungsverschleißzustand, des umlaufenden Transportelements 20 ermittelt werden.

Die Ist-Position des jeweils erfassten Mitnehmers 32 kann vorzugsweise abhängig von der Signalausgabe der Sensorvorrichtung 36 und mittels der Antriebssteuereinrichtung 26, vorzugsweise Servoumrichter, ermittelt werden. Vorzugsweise kann die Signalausgabe der als Signalschranke ausgeführten Sensorvorrichtung 36 (Sensor 38 und/oder 40) auf einen Triggereingang der Antriebssteuereinrichtung 26 gelegt (angeschlossen) sein.

Im Einzelnen kann bspw. mittels des als Signalschranke ausgeführten Sensors 38 ein Mitnehmer 32 beim Passieren des Antriebsrads 22 erfasst werden. Dieses Signal kann auf einen Eingang der als Servoumrichter ausgeführten Antriebssteuereinrichtung 26 gelegt werden. Der Servoumrichter kann bei einem Signaleingang von dem Sensor 38 eine aktuelle Antriebsposition, z. B. eine Position der Antriebswelle oder des Rotors, der Antriebseinrichtung 24 speichern und/oder ausgeben. Diese Position kann wiederum auf eine (Ist-Position) innerhalb der Teilung umgerechnet werden. Vorzugsweise kann dadurch auch die Positionsabweichung zu der vorgegeneben Teilung (dem vorgegebenen Soll-Teilungsabstand der Mitnehmer 32) bzw. zu den Endpunkten dieser Teilung ermittelt werden.

Alternativ ist es bspw. auch möglich, die Ist-Position des jeweils erfassten Mitnehmers 32 abhängig von der Signalausgabe der Sensorvorrichtung 36 und einer Signalausgabe des Drehgebers 30 zu ermitteln.

Die Ausgabeeinrichtung 44 weist vorzugsweise eine visuelle Anzeige und/oder einen Lautsprecher auf. Die Ausgabeeinrichtung 44 kann von der Auswerteeinrichtung 42 zum Ausgeben des ermittelten Verschleißzustands betrieben werden.

Die Servereinrichtung 46 ist vorzugsweise eine Cloud-Servereinrichtung. Beispielsweise kann die Servereinrichtung 46 einem Hersteller der Füllvorrichtung 14, der Verschließvorrichtung 16 und/oder des Förderers 18 zugeordnet sein. Die Auswerteeinrichtung 42 kann den ermittelten Verschleißzustand des Förderers 18 an die Servereinrichtung 46 senden, z. B. zum weiteren Auswerten und/oder zum vergleichenden Auswerten mit von anderen Anlagen empfangenen Verschleißzuständen für vergleichbare Förderer.

Die Figur 2 zeigt einen in der Praxis mittels des Sensors 38 aufgenommenen, rein beispielhaften Graph A, der die ermittelten, relativen Ist-Positionen (y-Achse) aller Mitnehmer 32 eines Förderers 18 für jeweils benachbarte Mitnehmer 32 miteinander verbindet. Der Graph B zeigt die vorgegebene, relative Soll-Position (y-Achse) der Mitnehmer 32, die für alle gleich ist. Es ist deutlich zu erkennen, dass die Ist-Positionen der Mitnehmer 32.1, 32.2 und 32.3 eine vergleichsweise große Abweichung zu der Soll-Position aufweisen. Dies deutet auf eine ungewünschte Verformung dieser Mitnehmer 32.1, 32.2 und 32.3 hin.

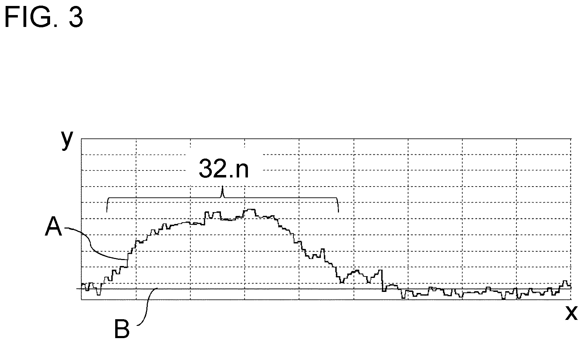

Die Figur 3 zeigt einen in der Praxis mittels des Sensors 40 aufgenommenen, rein beispielhaften Graph A, der die ermittelten relativen Ist-Positionen (y-Achse) aller Mitnehmer 32 eines Förderers 18 für jeweils benachbarte Mitnehmer 32 miteinander verbindet. Der Graph B zeigt wiederum die vorgegebene relative Soll-Position (y-Achse) der Mitnehmer 32, die für alle gleich ist. Es ist deutlich zu erkennen, dass die Ist-Positionen sehr vieler benachbarter Mitnehmer 32.n eine vergleichsweise große Abweichung zu der Soll-Position aufweisen und dies mit dem gleichen Vorzeichen. Dies deutet auf eine ungewünschte Längung des Transportelements 20, z. B. über mehrere Kettenglieder hinweg, hin.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Transportelements, der Mitnehmer und/oder der Sensorvorrichtung des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Behälterbehandlungsanlage
- 12: Behälter
- 14: Füllvorrichtung
- 16: Verschließvorrichtung
- 18: Förderer
- 20: Transportelement
- 22: Antriebsrad
- 24: Antriebseinrichtung
- 26: Antriebssteuereinrichtung
- 28: Umlenkrad
- 30: Drehgeber
- 32: Mitnehmer
- 34: Stützfläche
- 36: Sensorvorrichtung
- 38: Antriebsbereich-Sensor
- 40: Umlenkbereich-Sensor
- 42: Auswerteeinrichtung
- 44: Ausgabeeinrichtung
- 46: Servereinrichtung

## Patentansprüche

1. Förderer (18) zum Behältertransport, vorzugsweise Dosentransport, für eine Behälterbehandlungsanlage (10), wobei der Förderer (18) aufweist:
ein umlaufendes Transportelement (20), vorzugsweise Transportkette;
mehrere Mitnehmer (32), die voneinander beabstandet entlang des umlaufenden Transportelements (20) an dem umlaufenden Transportelement (20) zum Mitnehmen von Behältern (12), vorzugsweise jeweils eines Behälters (12), befestigt sind; und
eine Sensorvorrichtung (36), die dazu ausgebildet ist, die mehreren Mitnehmer (32) zu erfassen.

2. Förderer (18) nach Anspruch 1, wobei:
die Sensorvorrichtung (36) dazu ausgebildet ist, die mehreren Mitnehmer (32) während eines Betriebs des Förderers (18) nacheinander an mindestens einer vorgegebenen Position, vorzugsweise in einem Antriebsbereich und/oder in einem Umlenkbereich, des Förderers (18) zu erfassen.

3. Förderer (18) nach Anspruch 1 oder Anspruch 2, wobei:
die Sensorvorrichtung (36) dazu ausgebildet ist, die mehreren Mitnehmer (32) jeweils beim Unterbrechen mindestens einer Signalschranke, vorzugsweise Lichtschranke, der Sensorvorrichtung (36) zu erfassen.

4. Förderer (18) nach einem der vorherigen Ansprüche, wobei:
die mehreren Mitnehmer (32) als an dem umlaufenden Transportelement (20) befestigte Kragarme ausgebildet sind.

5. Förderer (18) nach Anspruch 4, wobei:
die Sensorvorrichtung (36) dazu ausgebildet ist, die Kragarme an einem freien Ende des jeweiligen Kragarms zu erfassen.

6. Förderer (18) nach einem der vorherigen Ansprüche, wobei:
der Förderer (18) ein Antriebsrad (22), vorzugsweise Antriebsritzel, das antreibend mit dem Transportelement (20) verbunden ist, aufweist; und
die Sensorvorrichtung (36) einen Antriebsbereich-Sensor (38), vorzugsweise Signalschranke, besonders bevorzugt Lichtschranke, aufweist, der zum Erfassen der Mitnehmer (32) beim Passieren des Antriebsrads (22) angeordnet ist, vorzugsweise zum Ermitteln eines Verformungsverschleißzustands des jeweiligen Mitnehmers (32).

7. Förderer (18) nach einem der vorherigen Ansprüche, wobei:
der Förderer (18) ein Umlenkrad (28), vorzugsweise Umlenkritzel, das zum Umlenken des Transportelements (20) mit dem Transportelement (20) verbunden ist, aufweist; und
die Sensorvorrichtung (36) einen Umlenkbereich-Sensor (40), vorzugsweise Signalschranke, besonders bevorzugt Lichtschranke, aufweist, der zum Erfassen der Mitnehmer (32) beim Passieren des Umlenkrads (28) angeordnet ist, vorzugsweise zum Ermitteln eines Längungsverschleißzustands des umlaufenden Transportelements (20).

8. Förderer (18) nach einem der vorherigen Ansprüche, ferner aufweisend:
eine Auswerteeinrichtung (42), die dazu konfiguriert ist:
- abhängig von einer Signalausgabe der Sensorvorrichtung (36) einen Verschleißzustand des Förderers (18) zu ermitteln; und optional
- eine Ausgabeeinrichtung (44) zum Ausgeben des ermittelten Verschleißzustands zu betreiben und/oder den ermittelten Verschleißzustand an eine Servereinrichtung (46) zu senden und/oder einen Betrieb einer Antriebseinrichtung (24) des Förderers (18) zum zumindest teilweisen Kompensieren des ermittelten Verschleißzustands anzupassen.

9. Förderer (18) nach Anspruch 8, wobei:
die Auswerteeinrichtung (42) dazu konfiguriert ist:
- abhängig von der Signalausgabe der Sensorvorrichtung (36) eine Positionsabweichung des jeweils erfassten Mitnehmers (32) zwischen einer Ist-Position des jeweils erfassten Mitnehmers (32), vorzugsweise bezüglich des umlaufenden Transportelements (20), und einer Soll-Position des jeweils erfassten Mitnehmers (32), vorzugsweise bezüglich des umlaufenden Transportelements (20), zu ermitteln; und
- den Verschleißzustand des Förderers (18) abhängig von den ermittelten Positionsabweichungen zu ermitteln.

10. Förderer (18) nach Anspruch 9, wobei:
die Auswerteeinrichtung (42) dazu konfiguriert ist:
- für die mehreren Mitnehmer (32) jeweils einzeln und identifizierbar einen Verschleißzustand, vorzugsweise Verformungsverschleißzustand, abhängig von der jeweils ermittelten Positionsabweichung zu ermitteln; und/oder
- für den Fall einer über mehrere aufeinanderfolgende Mitnehmer (32) hinweg aufgetretenen Positionsabweichung mit gleichem Vorzeichen einen Verschleißzustand, vorzugsweise Längungsverschleißzustand, des umlaufenden Transportelements (20) zu ermitteln.

11. Förderer (18) nach Anspruch 9 oder Anspruch 10, wobei:
die Auswerteeinrichtung (42) dazu konfiguriert ist:
- die Ist-Position des jeweils erfassten Mitnehmers (32) abhängig von der Signalausgabe der Sensorvorrichtung (36) und mittels einer Antriebssteuereinrichtung (26), vorzugsweise Servoumrichter, einer Antriebseinrichtung (24) des Förderers (18) zu ermitteln, wobei besonders bevorzugt die Signalausgabe der Sensorvorrichtung (36) auf einen Triggereingang der Antriebssteuereinrichtung gelegt ist; oder
- die Ist-Position des jeweils erfassten Mitnehmers (32) abhängig von der Signalausgabe der Sensorvorrichtung (36) und einer Signalausgabe eines Drehgebers (30) des Förderers (18) zu ermitteln.

12. Behälterbehandlungsanlage (10), vorzugsweise Dosenbehandlungsanlage, wobei die Behälterbehandlungsanlage (10) aufweist:
eine Füllvorrichtung (14), vorzugsweise Rundläufer-Füllvorrichtung, zum Füllen von Behältern (12);
eine Verschließvorrichtung (16), vorzugsweise Rundläufer-Verschließvorrichtung, zum Verschließen der Behälter (12); und
einen Förderer (18) nach einem der vorherigen Ansprüche, wobei der Förderer (18) mit der Füllvorrichtung (14) zum Übernehmen der Behälter (12) von der Füllvorrichtung (14) und mit der Verschließvorrichtung (16) zum Übergeben der übernommenen Behälter (12) an die Verschließvorrichtung (16) verbunden ist.

13. Verfahren zum Überwachen eines Förderers (18) zum Behältertransport, vorzugsweise Dosentransport und/oder nach einem der Ansprüche 1 bis 11, für eine Behälterbehandlungsanlage (10), wobei das Verfahren aufweist:
Betreiben des Förderers (18) zum Bewegen eines umlaufenden Transportelements (20), vorzugsweise Transportkette, des Förderers (18) zusammen mit mehreren Mitnehmern (32), die voneinander beabstandet entlang des umlaufenden Transportelements (20) an dem umlaufenden Transportelement (20) zum Mitnehmen von Behältern (12), vorzugsweise jeweils eines Behälters (12), befestigt sind; und
Erfassen der mehreren Mitnehmer (32) während des Betreibens des Förderers (18) mittels einer Sensorvorrichtung (36), vorzugsweise nacheinander an mindestens einer vorgegebenen Position, bevorzugt in einem Transportelement-Antriebsbereich und/oder in einem Transportelement-Umlenkbereich, des Förderers (18).

14. Verfahren nach Anspruch 13, wobei mindestens eines erfüllt ist von:
die mehreren Mitnehmer (32) werden jeweils beim Unterbrechen mindestens einer Signalschranke, vorzugsweise Lichtschranke, der Sensorvorrichtung (36) erfasst;
die mehreren Mitnehmer (32) sind als an dem umlaufenden Transportelement (20) befestigte Kragarme ausgebildet und optional werden die Kragarme an einem freien Ende des jeweiligen Kragarms von der Sensorvorrichtung (36) erfasst;
die mehreren Mitnehmer (32) werden von einem Antriebsbereich-Sensor (38) beim Passieren eines Antriebsrads (22) des Förderers (18) erfasst, vorzugsweise zum Ermitteln eines Verformungsverschleißzustands des jeweiligen Mitnehmers (32); und
die mehreren Mitnehmer (32) werden von einem Umlenkbereich-Sensor (40) beim Passieren eines Umlenkrads (28) des Förderers (18) erfasst, vorzugsweise zum Ermitteln eines Längungsverschleißzustands des umlaufenden Transportelements (20).

15. Verfahren nach Anspruch 13 oder Anspruch 14, ferner aufweisend:
mittels einer Auswerteeinrichtung (42), Ermitteln eines Verschleißzustands des Förderers (18) abhängig von dem Erfassen der mehreren Mitnehmer (32) und optional Betreiben einer Ausgabeeinrichtung (44) zum Ausgeben des ermittelten Verschleißzustands und/oder Senden des ermittelten Verschleißzustands an eine Servereinrichtung (46) und/oder Anpassen eines Betriebs einer Antriebseinrichtung (24) des Förderers (18) zum zumindest teilweisen Kompensieren des ermittelten Verschleißzustands; und vorzugsweise:
mittels der Auswerteeinrichtung (42), abhängig von dem Erfassen der mehreren Mitnehmer (32) eine Positionsabweichung des jeweils erfassten Mitnehmers (32) zwischen einer Ist-Position des jeweils erfassten Mitnehmers (32), vorzugsweise bezüglich des umlaufenden Transportelements (20), und einer vorgegebenen Soll-Position des jeweils erfassten Mitnehmers (32), vorzugsweise bezüglich des umlaufenden Transportelements (20), ermittelt wird und der Verschleißzustand des Förderers (18) abhängig von den ermittelten Positionsabweichungen ermittelt wird; und optional mindestens eines von:
- für die mehreren Mitnehmer (32) jeweils einzeln und identifizierbar ein Verschleißzustand, vorzugsweise Verformungsverschleißzustand, abhängig von der jeweils ermittelten Positionsabweichung ermittelt wird;
- für den Fall einer über mehrere aufeinanderfolgende Mitnehmer (32) hinweg aufgetretenen Positionsabweichung mit gleichem Vorzeichen ein Verschleißzustand, vorzugsweise Längungsverschleißzustand, des umlaufenden Transportelements (20) ermittelt wird; und
- die Ist-Position des jeweils erfassten Mitnehmers (32) abhängig von der Signalausgabe der Sensorvorrichtung (36) und mittels einer Antriebssteuereinrichtung (26), vorzugsweise Servoumrichter, einer Antriebseinrichtung (24) des Förderers (18) oder abhängig von der Signalausgabe der Sensorvorrichtung (36) und einer Signalausgabe eines Drehgebers (30) des Förderers (18) ermittelt wird.
